# EUROPÄISCHE PATENTSCHRIFT

(11) **EP 0 331 884 B1**
(45) Veröffentlichungstag und Bekanntmachung des Hinweises auf die Patenterteilung: **03.11.1993**
(21) Anmeldenummer: 89100881.5
(22) Anmeldetag: 19.01.1989
(51) Int. Cl.: F16D 65/02

(54) **Teilbelag-Scheibenbremse, insbesondere innenumgreifende Scheibenbremse**
Spot-type disc brake, especially disc brake with internal caliper
Frein à disque à garniture partielle, en particulier frein à disque à étrier interne

(30) Priorität: 11.03.1988 DE 3808139
(43) Veröffentlichungstag der Anmeldung: 13.09.1989
(73) Patentinhaber: ITT Automotive Europe GmbH, 60488 Frankfurt (DE)
(72) Erfinder: Thiel, Rudolf, D-6000 Frankfurt/Main 90 (DE); Wienecke, Franz, D-6370 Oberursel 4 (DE); Kast, Helmut, D-6000 Frankfurt/Main (DE); Bungert, Hans, D-6222 Geisenheim (DE)

(56) Entgegenhaltungen:
- DE-A- 3 446 755
- DE-A- 3 641 921

## Beschreibung

Innenumgreifende Scheibenbremsen haben unter Berücksichtigung ihrer Abmessungen eine recht gute Bremswirkung. Andererseits ist die Auswechselbarkeit der Bremsbeläge dadurch erschwert, daß zum äußeren Bremsbelag kein direkter Zugriff besteht, da die Bremsscheibe über diesen Belag zwischen die Beläge greift. Weiterhin muß bei innenumgreifenden Scheibenbremsen darauf geachtet werden, daß der äußere Belag selbsttätig sicher gehalten wird, da eine nachträgliche Befestigung des äußeren Bremsbelages nur nach Ausbau der Bremsscheibe möglich ist. Soweit die innenumgreifende Scheibenbremse einen die beiden Arme des Trägers miteinander verbindenden und damit den Träger versteifenden Trägerbügel besitzt, besteht weiterhin die Schwierigkeit, daß dieser Bügel einen Ausbau des kolbenseitigen Bremsklotzes in radialer Richtung behindern kann.

Liegt der kolbenseitige Bremsklotz in radialer Richtung auf dem Träger auf, so wird man zum Verhindern von Klappergeräuschen versuchen, diesen Bremsklotz radial nach innen mit einer Feder elastisch auf seiner Auflage zu halten.

Aus der DE-A 34 46 755 ist eine innenumgreifende Scheibenbremse bekannt geworden, bei der zwei an einem Trägerbügel angreifende Federn den kolbenseitigen Belag radial nach innen gerichtet auf seine axiale Führung pressen. Nachteilig bei dieser Scheibenbremse ist es, daß die beiden an dem Federbügel befestigten Federn eine relativ kurze Schenkellänge haben, so daß die Federn verhältnismäßig steif sind. Nachteilig bei der bekannten Scheibenbremse ist es weiterhin, daß jede der beiden Federn an ihrem Ende in einer oberhalb des Bremsklotzes liegenden Durchgangsöffnung im Trägerbügel gehalten ist, so daß dieser Bügel gerade an Stellen geschwächt wird, an denen er ohnedies relativ dünn ist. Die Verwendung zweier Federn hat weiterhin den Nachteil, daß der Ausbau des inneren Bremsklotzes erschwert wird, wobei beide Federn in ihrer Form voneinander abweichen, so daß sie bei ihrem Einbau nicht verwechselt werden dürfen.

Bei den bekannten innenumgreifenden Scheibenbremsen ist weiterhin vorgesehen, daß zur Sicherung des äußeren Bremsklotzes dieser fest mit dem äußeren Schenkel des Sattels verschraubt ist, um eine dauerhafte Befestigung dieses Bremsklotzes am Sattel sicherzustellen. Eine derartige Befestigungsart ist nicht nur relativ aufwendig in der Herstellung, sondern auch vergleichsweise zeitaufwendig beim Auswechseln des äußeren Bremsklotzes.

Die vorliegende Erfindung geht daher aus von einer innenumgreifenden Schwimmsattelbremse der sich aus dem Oberbegriff des Hauptanspruchs ergebenden Gattung und hat sich die Verbesserung einer derartigen Bremse zur Aufgabe gestellt. Insbesondere soll die Auswechselbarkeit der Bremsklötze und deren Sicherung bei Verringerung des benötigten Einbauraumes verbessert werden.

Die gestellte Aufgabe wird durch die sich aus dem kennzeichnenden Teil des Hauptanspruchs ergebenden Merkmale gelöst. Die Erfindung besteht im Prinzip darin, die an dem Bremsbelag angreifende Feder mit ihren Enden an dem Träger abzustützen. Damit drückt die Drahtfeder den Bremsklotz entgegen seiner Ausbaurichtung auf seine Führung. Darüber hinaus kommt die Erfindung aber auch ohne eine Feder an der Belagrückenplatte aus, wie sie in der DE-OS 35 32 373 geschildert ist. Die bekannte Feder hat zwar den Vorteil, daß sie hinsichtlich der Einbaurichtung des Bremsklotzes neutral ist, gleichzeitig hat sie aber auch den Nachteil, daß hierdurch die Bauhöhe des Bremsklotzes und damit der benötigte Einbauraum vergrößert wird.

Obwohl die erfindungsgemäße Scheibenbremse insbesondere als innenumgreifende Scheibenbremse geeignet ist, bei der ja nur ein beengter Montageraum für die Bremsklötze zur Verfügung steht, läßt sich die Scheibenbremse auch als außenumgreifende Bremse verwenden, wobei die Drahtbiegefeder gleichzeitig eine Sicherung gegen das Herausfallen der Bremsklötze übernimmt. Diese verriegelnde Sicherungswirkung ist selbstverständlich auch bei der Verwendung als innenumgreifende Scheibenbremse gegeben.

Eine Verlängerung des Federweges und damit eine erleichterte Bedienbarkeit der Drahtfeder läßt sich durch die in Anspruch 2 angegebene Merkmalskombination erreichen.

Um der Feder der Scheibenbremse eine gute Führung zu geben, empfiehlt sich in Weiterbildung der Erfindung die in Anspruch 3 geschilderte Merkmalskombination. Gemäß diesem Anspruch ist das erste Ende der Feder schwenkbar im Träger gelagert, während das zweite Ende an der gegenüberliegenden Trägerseite rastend arretiert werden kann.

In Fortbildung der Erfindung empfiehlt es sich, die beiden Trägerarme durch einen Verbindungssteg miteinander zu verbinden, so daß das zweite Federende, wie in Anspruch 4 geschildert, an dem Verbindungssteg rastend eingreift. Die Führungsöffnung für das erste Ende der Drahtfeder wird gemäß Anspruch 5 in Verbesserung der Erfindung als Durchgangsloch in dem Verbindungssteg ausgestaltet.

Um das erste Ende der Drahtfeder in dem Durchgangsloch zu halten, empfiehlt sich eine Ausgestaltung nach Anspruch 6, wobei der äußere Schenkel des U-förmigen Federendes entweder so lang gewählt werden kann, daß er während des Ausbaus der Bremsklötze zwangsweise mit seinem ersten Ende in dem Durchgangsloch gehalten wird oder so kurz gewählt wird, daß er beim Ausbauen der Bremsklötze von dem Servicepersonal vorübergehend aus dem Träger herausgenommen und beiseite gelegt werden kann. Beide Versionen entsprechend Anspruch 7 oder 8 haben Vor- und Nachteile. Wesentlich ist, daß nach Anspruch 5 während des eingerasteten Zustands der Feder diese durch die Wirkung des äußeren Schenkels am ersten Ende gegen ein unbeabsichtigtes Lösen oder Verlieren gemäß Anspruch 6 gesichert ist.

Um den Hebelweg für den von Hand einzurastenden Abschnitt der Feder groß und damit die Feder leichter handhabbar zu machen, empfiehlt sich eine Ausgestaltung nach Anspruch 10. Diese Ausgestaltung ermöglicht insbesondere eine Weiterbildung nach Anspruch 11, durch welche der kolbenseitige Bremsbelag nicht nur gegen seine Führung, sondern gleichzeitig auch noch in Richtung Kolben gedrückt werden kann. Somit stützt die Drahtfeder den Bremsklotz nicht nur federnd in radialer Richtung gegen seine Führung, sondern zusätzlich auch noch in axialer Richtung gegen den Bremskolben.

Vielfach ist es erwünscht, den Hebelweg für die Schwenkung des Bremsklotzes in axialer Richtung zum Kolben hin zu vergrößern und gleichzeitig auch noch die Temperatureinflüsse des im Bremsfalle sich erhitzenden Bremsbelages möglichst gering zu halten. Hierzu empfiehlt sich in Weiterbildung der Erfindung eine Ausgestaltung nach Anspruch 12.

Die Ausgestaltung nach Anspruch 13 läßt für den ersten restenden Abschnitt der Drahtfeder einen besonders langen Weg zu. Hinzu kommt, daß sowohl die Bremsklötze als auch die Feder und der Träger in ihrer Ausgestaltung unabhängig davon werden, ob nun die Scheibenbremse auf der rechten oder linken Seite des PKW eingebaut wird.

Um ein Verlieren der Bremsklötze, abgesehen von der rückhaltenden Wirkung der Feder, zusätzlich zu verhindern, empfiehlt sich eine Merkmalskombination nach Anspruch 14, gemäß der ein kurzer aus der Rückenplatte in den Bremszylinder ragender Ansatz ein Verlieren des Klotzes in radialer Richtung verhindert. Dieser Ansatz wird dadurch besonders wirksam, daß gemäß Anspruch 11 durch die Feder dieser Ansatz ständig im Eingriff mit dem Zylinder gehalten ist.

Die Erfindung soll besonders für Scheibenbremsen geeignet sein, in der nur ein geringer Einbauraum für die Bremsklötze zur Verfügung steht. Um nun zu verhindern, daß beim Einbauen des kolbenseitigen ersten Bremsklotzes der Ansatz an der Schutzkappe des Bremszylinders hängenbleibt und diesen beschädigt, ist in Weiterbildung der Erfindung eine Ausgestaltung nach Anspruch 15 zweckmäßig.

Eine Merkmalskombination gemäß Anspruch 16 macht die erfindungsgemäße Scheibenbremse, insbesondere als innenumgreifende Scheibenbremse geeignet. Ist nämlich deren Einbauraum beschränkt, so ist aus konstruktiven Gründen der dem Kolben abgewandte äußere Bremsklotz nicht mehr erreichbar. In diesem Falle muß also dafür gesorgt werden, daß der Einbauraum für den äußeren Bremsklotz möglichst gering bleibt und gleichzeitig dieser Bremsklotz auch dann gut verankert haltbar bleibt, wenn die Bremsscheibe aus- bzw. eingebaut wird. Diesen Zwecken dienen in erfindungsgemäßer Weiterbildung der Erfindung die Merkmale der Ansprüche 16 bis 22.

Durch diese Merkmale kann insbesondere verhindert werden, daß nach dem Einbau des äußeren Bremsklotzes dieser durch den folgenden Einbau der Bremsscheibe aus seiner Verankerung gerissen und damit in seiner Bremswirkung beeinträchtigt werden kann.

Die weiteren Unteransprüche beschreiben in vorteilhafter Weiterbildung der Erfindung die zweckmäßige Ausgestaltung des kolbenseitigen ersten Bremsklotzes, des äußeren zweiten Bremsklotzes, der Drahtfeder sowie geeignete Verfahren zum Ausbau und Einbau der genannten Bremsklötze.

Ausführungsbeispiele der Erfindung sind in der Zeichnung dargestellt und im folgenden beschrieben.

Es zeigen:
- Fig. 1: eine innenumgreifende Teilbelag-Scheibenbremse von der Fahrzeug-Außenseite her gesehen;
- Fig. 2: die Scheibenbremse gemäß Fig. 1 von der Fahrzeug-Innenseite her gesehen;
- Fig. 3: eine Draufsicht auf die in Fig. 1 und 2 dargestellte Scheibenbremse;
- Fig. 4: einen Längsschnitt durch die Scheibenbremse und
- Fig. 5A bis Fig. 5G: weitere Ausführungsformen einer erfindungsgemäßen Scheibenbremse in zum Teil geschnittener Darstellung, die die Befestigung des äußeren Bremsklotzes beschreiben.

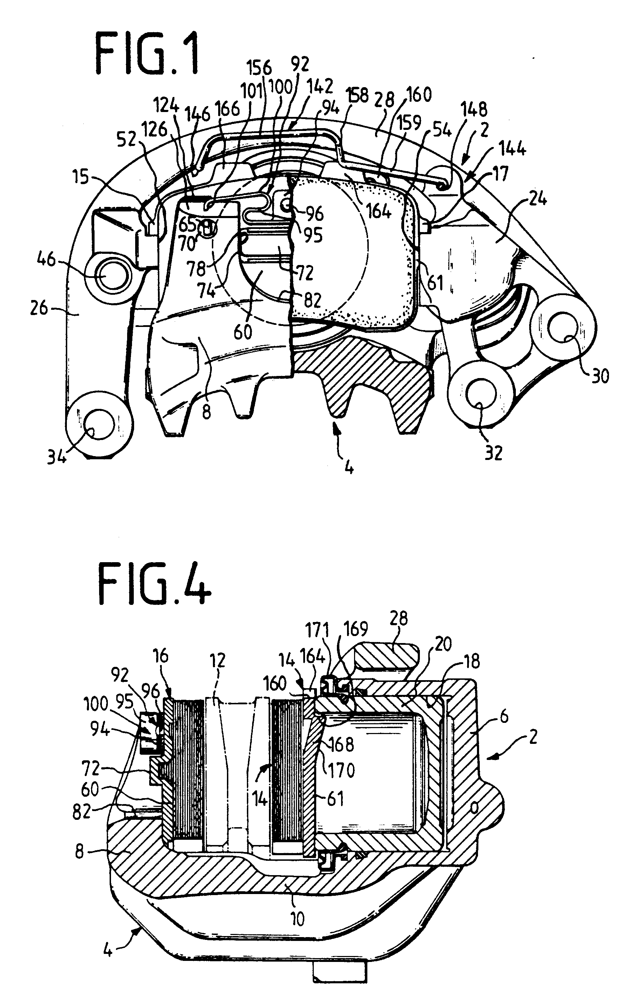

Es wird zunächst auf die in den Fig. 1 bis 4 dargestellte Ausführungsform einer innenumgreifenden Scheibenbremse 2 Bezug genommen. Die innenumgreifende Scheibenbremse 2 weist ein Bremsgehäuse 4 auf, welches im Längsschnitt im wesentlichen U-förmig ausgebildet ist, wobei es radial nach außen erstreckende Schenkel 6, 8 aufweist, die über ein Brückenteil 10 miteinander verbunden sind. Zu beiden Seiten der gestrichelt angedeuteten Bremsscheibe 12 sind Bremsbeläge 14, 16 angeordnet, die vom U-förmigen Bremsgehäuse 4 umgriffen sind. Zur Betätigung der Scheibenbremse weist der innenliegende Schenkel 6 eine Betätigungseinrichtung auf, wozu eine Zylinderbohrung 18 vorgesehen ist, in der ein Kolben 20 axial verschiebbar angeordnet ist. Der Kolben 20 beaufschlagt unmittelbar den innenliegenden Bremsbelag 14, wodurch als Reaktion das Bremsgehäuse 4 entgegengesetzt nach innen verschoben wird und dadurch der außenliegende Bremsbelag 16 beaufschlagt wird. Das Bremsgehäuse 4 ist hierzu axial verschiebbar an einem stationären Bremsträger 22 gelagert. Der Bremsträger 22 weist zwei Bremsträgerarme 24, 26 auf, die über einen Verbindungssteg 28 miteinander verbunden sind, so daß der Bremsträger 22 insgesamt eine bogenförmige Gestalt aufweist. Der Bremsträger 22 ist mit einem (nicht dargestellten) Achsschenkel eines Fahrzeuges verbunden und weist dazu drei Befestigungspunkte auf. Die Befestigungspunkte sind als Bohrungen 30, 32, 34 ausgeführt. Dabei sind zwei Bohrungen 30, 32 an dem in Hauptdrehrichtung gesehen eingangsseitig angeordneten Bremsträgerarm 22 vorgesehen und die andere Bohrung am Bremsträger 26. Die innenliegende Bohrung 32 liegt im wesentlichen auf demselben Radius wie die Bohrung 34 am auslaufseitigen Bremsträgerarm 26. Den Bohrungen 30, 32, 34 am Bremsträger 22 entsprechende Bohrungen sind im Achsschenkel vorgesehen, so daß der Bremsträger 22 mittels Schrauben mit dem Achsschenkel verbunden werden kann.

Zur axial verschiebbaren Lagerung des Bremsgehäuses 4 am Bremsträger 22 ist ein Tragbolzen 36 vorgesehen, der in einer Bohrung des Bremsgehäuses 4 fest angeordnet ist. Der Tragbolzen 36 bildet ein aus der Bohrung herausragendes freies Ende, welches eine Führungsfläche bildet, die mit einer im Bremsträger vorgesehenen Führungsbohrung zusammenwirkt. Zum Schutz der Führungsfläche ist zwischen dem die Bohrung enthaltenden Auge 38 des Bremsträgers 22 und dem die Befestigungsbohrung für den Tragbolzen enthaltenden Auge 40 des Bremsgehäuses 2 eine Schutzkappe 42 vorgesehen.

Auf der, in Hauptdrehrichtung gesehen, Ausgangsseite ist eine Einrichtung 44 vorgesehen, um die beim Bremsen um den Tragbolzen 36 auftretenden Momente aufzunehmen. Die Einrichtung 44 weist einen kurzen Bolzen 46 auf, der im Bremsträgerarm 26 befestigt ist und der sich parallel zum Tragbolzen 36 von der Bremsscheibe wegerstreckt. Der Bolzen 46 greift in eine im Bremsgehäuse 4 vorgesehene Bohrung 48 ein. Die Durchmesser der Bohrung 48 und des Bolzens 46 sind dabei so bemessen, daß zwischen beiden ein freier Ringraum verbleibt. In diesem Ringraum sitzt eine elastische Hülse 47, um die beim Bremsen auftretenden Bewegungen des Bolzens 46 in der Bohrung 48 zu dämpfen.

Zur Abstützung des innenliegenden Bremsbelages 14 im Bremsträger 22 bildet letzterer einen Schacht 50, der in Umfangsrichtung durch Abstützflächen 52, 54 begrenzt ist. Die Abstützflächen 52, 54 sind dabei im Bereich des Tragbolzens 36 und des Bolzens 46 vorgesehen. Zur Halterung des inneren Bremsbelages 14 in radialer Richtung weist dieser Schultern bzw. Absätze 15,17 auf, die auf entsprechenden Abstützflächen 53,55 des Bremsträgers ruhen.

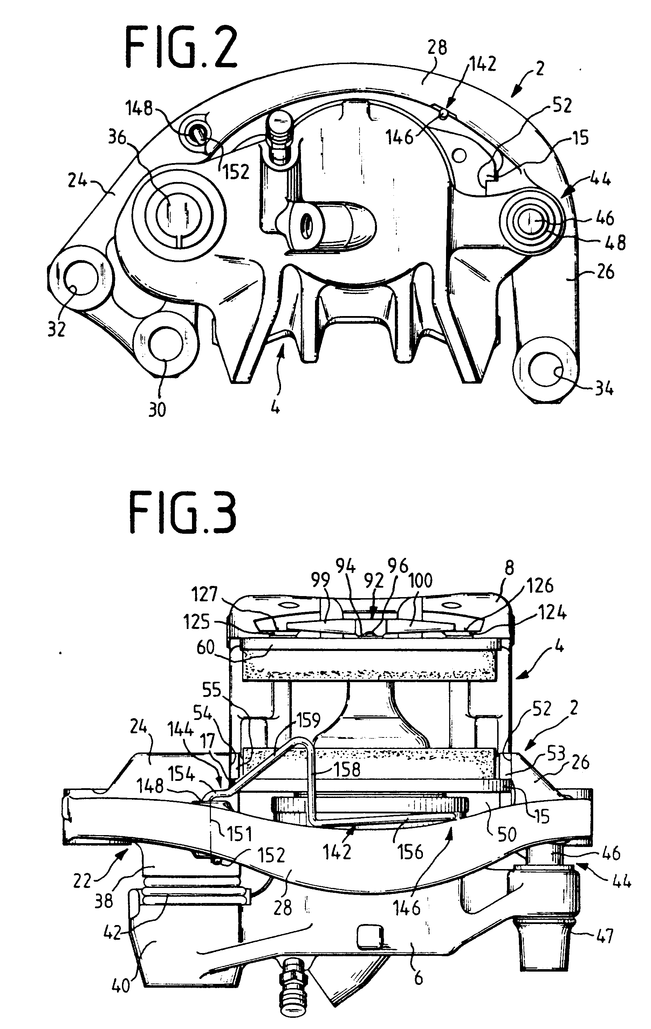

Eine Drahtbiegefeder 142 ragt mit ihrem ersten Ende 144 durch ein Durchgangsloch 148. Das erste Ende 144 der Drahtfeder 142 ist U-förmig gebogen, wobei der innere Schenkel 154 mit dem äußeren Schenkel 152 durch einen sich längs der Längsachse 151 der Druchgangsbohrung 148 erstreckenden mittleren Schenkel miteinander verbunden sind. In dem Ausführungsbeispiel nach Fig. 3 ist der sich in der Zeichnung nach rechts erstreckende äußere Schenkel 152 relativ kurz gewählt, so daß er im eingebauten Zustand der Feder 142 zwar als Sicherung gegen Herausgleiten des ersten Endes 144 dienen kann, die Feder durch entsprechendes Drehen aber sich aus der Öffnung 148 herausnehmen läßt, sobald die Feder an ihrem zweiten Ende 146 ausgerastet ist.

An das erste Federende 144 schließt sich ein dritter Federabschnitt 159 an, der wie aus Fig. 1 und 3 ersichtlich, sich leicht nach oben und schräg gegen die Symmetrieachse erstreckt. An den dritten Abschnitt schließt sich dann ein zweiter Abschnitt 158 an, der leicht ansteigend in Richtung Bremskolben 20 verläuft. Das Ende des zweiten Abschnitts mit dem zweiten Ende 146 der Drahtfeder 142 verbindet ein erster Federabschnitt 156, der im wesentlichen in Umfangsrichtung der Bremsscheibe 12 verläuft. Das zweite Ende 146 der Drahtfeder 142 hat eine krallenförmige Gestalt, welche unter den Verbindungssteg 28 greift.

Die Drahtfeder 142 stützt sich mit ihrem zweiten Abschnitt 158 an einen trapezförmigen Ansatz 164 an der Rückenplatte 61 des Bremsklotzes 14 ab. Durch die in Richtung Kolben leicht ansteigende Neigung des mittleren Abschnitts 158 entsteht eine in Richtung Kolben gerichtete Kraft an dem Ansatz 164 des Bremsbelags 14, so daß der Bremsbelag in dieser Richtung nicht durch eine gesonderte Maßnahme gesichert werden muß.

Will man die Drahtfeder 142 lösen, so biegt man deren zweites Ende 146 gleichzeitig entgegen der Vorspannkraft nach unten in Richtung Bremskolben und nach hinten in Richtung äußerer Bremsbelag. Durch diese Maßnahme kommt die Kralle unter dem Verbindungssteg 28 hervor und die Drahtfeder 142 kann um die Längsachse 151 geschwenkt werden. Wie weiter oben schon geschildert, ist aufgrund des kurzen äußeren Schenkels 152 die Feder 142 aus der Öffnung 148 herausnehmbar. Durch eine entsprechende Verlängerung des äußeren Schenkels 152 läßt sich aber die Feder 142 unverlierbar in der Öffnung 148 ausgestalten.

Will man die gleichen kolbenseitigen Bremsklötze sowohl für rechts wie für links am Kraftwagen angeordnete Scheibenbremsen verwenden, so empfiehlt es sich, einen einzigen Ansatz in der Symmetrieachse des Bremsklotzes 14 vorzusehen, an dem der mittlere Abschnitt 158 angreifen kann. Bei dem vorliegenden Ausführungsbeispiel sind zwei Ansätze 164,166 vorgesehen, hierdurch kann der Bremsbelag ebenfalls an beiden Seiten des Kraftfahrzeugs verbaut werden. Man hat aber noch den zusätzlichen Vorteil, daß durch diese Maßnahme der erste Abschnitt 156 erheblich länger wird als der dritte Abschnitt 159, so daß sich wegen des verlängerten Hebelweges die Feder erheblich leichter an ihrem Ende 146 biegen und damit ein- bzw. ausrasten läßt.

Die Ansätze 164,166 haben darüber hinaus noch den Vorteil daß der Angriffspunkt der Feder 142 weiter weg von der sich drehenden Bremsscheibe genommen wird und zusätzlich noch der Wärmeeinfluß der sich beim Bremsen erhitzenden Rückenplatte 61 vermindert wird.

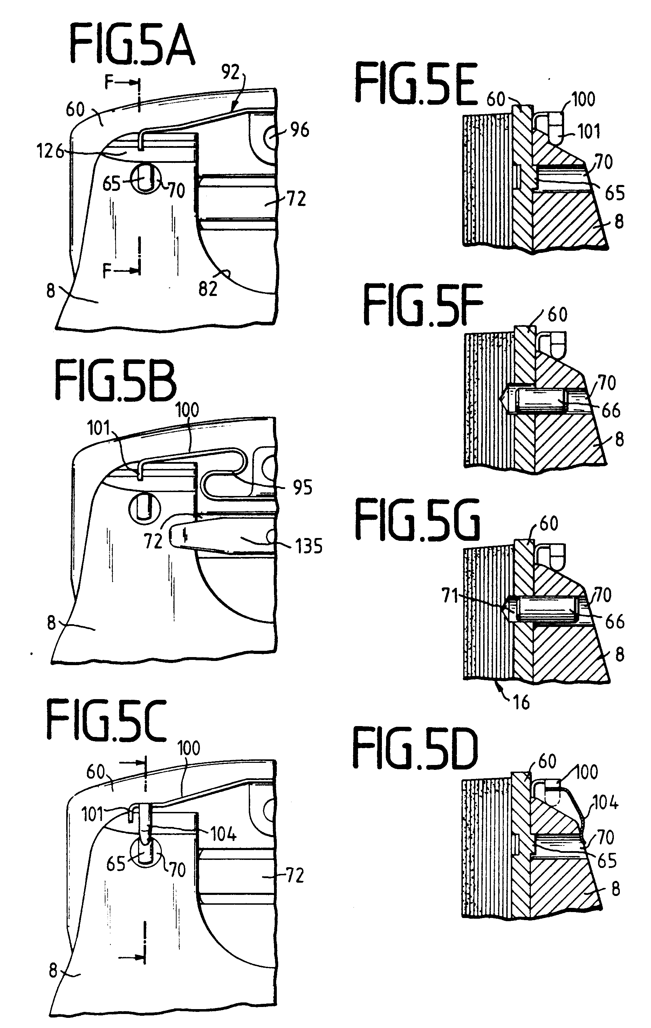

An der Rückenplatte 61 des Bremsbelags 14 ist in Fig. 3 noch ein nasenförmiger Ansatz 168 zu erkennen, welcher durch Ausprägen hergestellt wurde. Dieser Ansatz verhindert mit seiner senkrechten längs der Mantelfläche des Bremskolbens verlaufenden Kante 169, daß der Bremsklotz 14 sich in Fig. 4 nach oben aus dem Bremsschacht entfernen kann, da sich die Kante 169 an der Wand des Kolbens 20 verhakt.

Die der Kante 169 gegenüberliegende Rampenfläche 170 hat die Aufgabe zu verhindern, daß beim Einschieben des Bremsklotzes 14 die übliche Schutzkappe 171 verletzt wird. Dies könnte nämlich eintreten, wenn man anstatt der Rampenfläche 117 ebenfalls eine steile Kante 169 gewählt hätte und man den geringen zur Verfügung stehenden Einbauraum berücksichtigt. In diesem Falle hätte beim Einschieben des Bremsklotzes die der scharfen Kante 169 entsprechende scharfe Kante an der Stelle 170 an der Schutzkappe 171 angreifen und diese beschädigen können.

Zur Halterung des äußeren Bremsbelages 16 weist dieser an seiner Rückenplatte 60 zwei stiftartige Ansätze auf, von denen in Fig. 1 nur der Ansatz 65 zu erkennen ist. Die beiden Stifte 65 sind durch Prägen aus der Rückenplatte herausgearbeitet und liegen symmetrisch zu deren Mittellinie. Die Form der Ansätze 65 ist im wesentlichen rechteckförmig und in radialer Richtung längs gestreckt, wobei die in radialer Richtung liegenden Enden abgerundet und die Kanten mit Einlaufschrägen versehen sind. Zur Aufnahme der Ansätze 65 ist der Schenkel 8 mit kreiszylinderförmigen Durchgangslöchern 70 versehen, wobei die in radialer Richtung weisenden Seitenwände der Stifte 65 an den entsprechenden Teilen der Innenwand der Durchgangslöcher 70 anliegen. In Umfangsrichtung der Bremsscheibe 12 besitzen die Stifte 65 in den Durchgangslöchern 70 ein Spiel.

Auf der Rückenplatte 60 des Bremsbelages 16 ist weiterhin ein axial vorspringender Ansatz 72 ausgebildet, der hier durch Verformen der Rückenplatte hergestellt ist. Der Ansatz 72 weist im wesentlichen Rechteckform auf und erstreckt sich in Höhe der Abstützflächen 52,54 in Umfangsrichtung. Er weist seitliche Anlageflächen 74 auf (von denen in Fig. 1 nur eine zu sehen ist), die mit seitlichen Begrenzungsflächen 78 einer im äußeren Schenkel 8 vorgesehenen U-förmigen Ausnehmung 82 zusammenwirken. Sie seitlichen Begrenzungsflächen 78 der U-förmigen Ausnehmung 82 sind dabei radial nach innen, also in Richtung Brückenteil 10 des Gehäuses so weit verlängert, daß eine Anlage des Ansatzes 72 mit den Anlageflächen 74 auch unterhalb der Mittellinie (beispielsweise 4 bis 6 mm) erfolgt, so daß einerseits die Flächenpressung aufgenommen werden kann und andererseits die Abstützung im Angriffspunkt der Umfangskraft erfolgt und dadurch ein Drehmoment auf die Platte vermieden wird. Auf diese Weise wird das von der Bremsscheibe auf den Belag des Bremsklotzes beim Bremsen ausgeübte Drehmoment über die seitlichen Anlageflächen 74 des Ansatzes 72 auf die seitlichen Begrenzungsflächen der U-förmigen Ausnehmung 82 übertragen und damit von dem Schenkel 8 aufgenommen.

An der Rückenplatte 60 ist ferner eine Blattfeder 92 befestigt. Die Blattfeder 92 weist einen sich im wesentlichen radial erstreckenden Befestigungsabschnitt 94 auf. Der Befestigungsabschnitt 94 hat im wesentlichen Rechteckform und ist mit einer Bohrung versehen, durch die eine Niete 96 gesteckt werden kann. Die Befestigung kann auch durch zwei Nieten, Schrauben oder ähnliches erfolgen. Der Befestigungsabschnitt 94 geht an seinem in Fig. 1 unteren Ende in zwei symmetrisch zur Mittellinie ausgestalteten Verbindungsabschnitte über, (von denen nur der Verbindungsabschnitt 95 gezeigt ist) die jeweils S-förmig gefaltet sind und in radialer Richtung verlaufen. Durch diesen S-förmigen Verbindungdabschnitt wird eine größere Steifigkeit der Blattfeder und ein verbessertes Federverhalten erreicht. Jeder der beiden S-förmigen Verbindungsabschnitte 95 geht über in einen Flügel 99 bzw. 100, der, wie in Fig.3 ersichtlich, nach außen sich in seiner Breite verjüngt. Das äußere Ende des Flügels 99 bzw. 100 hat einen Abstand von etwa 5 mm gegenüber der Außenfläche der Rückenplatte 60.

Wie aus Fig. 1 ersichtlich münden die äußeren Enden der Flügel 99 bzw. 100 in Endstücke 101, von denen in Fig. 1 nur ein einziges gezeichnet ist, während auf der aufgebrochenen rechten Hälfte der Figur der vordere Bremsbelag 12 zu erkennen ist. Die beiden Endstücke greifen mit einer axial gerichteten Vorspannung jeweils an einer in radialer Richtung verlaufenden Anlagefläche 126 bzw. 127 an und pressen somit die dem Belag abgewandte Rückenfläche der Rückenplatte 60 gegen den Schenkel 8.

Damit ist der Bremsklotz 16 gegenüber dem Schenkel 8 wie folgt gesichert. Eine seitliche Bewegung des Bremsbelags 16 gegenüber dem Schenkel wird durch die Seitenflächen 74 des Ansatzes 72 an den Begrenzungsflächen 78,80 der U-förmigen Ausnehmung 82 verhindert. In radialer Richtung ist die Bewegung des Bremsklotzes durch die Stifte 65 begrenzt, welche in die Durchgangslöcher 70 eingreifen. In axialer Richtung ist der Bremsklotz durch die Federkraft der Endstücke 101 gehalten, welche an den Anlageflächen 126,127 angreifen.

Um nun in die so festgelegte Lage zu gelangen, wird der Bremsklotz 16 mit seinem Ansatz 72 in die Ausnehmung 82 eingesetzt, wobei die Endstücke 101 auf den Ablaufschrägen 124 bzw. 125 aufsitzen, die ansteigend in die Anlageflächen 126,127 übergehen. Durch Niederpressen des mit dem Ansatz 72 in dem Schenkel 8 geführten Bremsbelages gelangen so die Endstücke 101 an die zugehörigen Anlageflächen, während die Stifte 65 in den zugehörigen Durchgangslöchern 70 einrasten.

Die Figuren 5A bis 5G zeigen Abänderungen der Sicherung der Belagrückenplatte 60 in axialer Richtung. Die in Fig. 5A auszugsweise und vergrößert dargestellte Befestigung der Rückenplatte 60 an dem Schenkel 8 unterscheidet sich von Fig. 1 durch eine vereinfacht ausgestaltete Blattfeder 92, bei der der S-förmige Verbindungsabschnitt 95 weggelassen wurde. Fig. 5E zeigt in teilweiser Darstellung eine geschnittene Seitenansicht von Fig. 5A, wobei der Schnitt in Höhe der Pfeile F verläuft.

Der Unterschied von Fig. 5B zu Fig. 1 besteht im wesentlichen in der Hinzufügung einer mit dem Ansatz 72 vernieteten Haltefeder 135, die zusätzlich noch für eine axial gerichtete Vorspannung des Bremsklotzes gegenüber dem Schenkel 8 sorgt.

In Fig. 5C ist das Endstück 101 des Blattfederflügels 100 zusätzlich noch mit einer Lasche versehen, die mit ihrem Ende in die Öffnung 70 im Schenkel 8 ragt und somit für eine Sicherung der Rückenplatte 60 gegenüber dem Schenkel 8 vornehmlich in axialer Richtung sorgt. Fig. 5D zeigt in geschnittener Darstellung eine teilweise Seitenansicht von Fig. 5C. Wie aus Fig. 5D ersichtlich kann durch die sichernde Lasche 104 auf die Herstellung einer radial verlaufenden Anlagefläche 126,127 verzichtet werden.

Die Figuren 5F und 5G zeigen Möglichkeiten auf die Anlagefläche 126 in Fig. 5A zu verzichten, indem wahlweise statt eines Ansatzes 65 ein Stift 66 verwendet wird. Dieser Stift kann wahlweise in die Bohrung 70 eingepaßt oder in eine Öffnung 71 des Bremsklotzes 16 eingefügt sein.

Die vorliegende Erfindung ist insbesondere geeignet für innenumgreifende Scheibenbremsen mit beschränktem Einbauraum. Die Sicherung der Bremsklotzes 16 ist dabei derart gewählt, daß er auch bei Einbau der innenumgriffenen Bremsscheibe 12 keinesfalls aus seiner Verrastung herausgepreßt werden kann. Dies ist insbesondere deshalb wichtig, weil nach Montage der innenumgriffenen Bremsscheibe ein Zugriff zu dem äußeren Bremsklotz 16 nicht mehr möglich ist und dementsprechend auch nach Einbau der Scheibe nicht mehr kontrolliert werden kann, ob der äußere Bremsklotz durch den Einbau der Bremsscheibe nicht aus seiner Einbaulage gebracht wurde.

Der nachfolgende Einbau des inneren, kolbenseitigen Bremsklotzes 14 geschieht nach Einbau der Bremsscheibe dermaßen, daß dieser in radialer Richtung längs der Bremsscheibe in seine Einbaulage gebracht und nachfolgend durch Einrasten der Biegefeder 142 gegen Verlieren gesichert und durch die axial gerichtete Kraft der Drahtfeder 142 sowie die Wirkung des Ansatzes 168 in den Zylinderkolben 20 verriegelt wird.

## Patentansprüche

1. Innenumgreifende Schwimmsattelbremse mit einem kolbenseitigen inneren und einem äußeren Bremsklotz (14 bzw. 16), wobei der innere Bremsklotz (14) durch sich an einem die beiden Arme (24,26) des Bremsträgers (22) verbindenden Trägerbügel (28) abstützende Federkraft in radialer Richtung gegenüber seiner Auflage (15,17) vorgespannt ist und der äußere Bremsklotz (16) lösbar mit dem Sattel (4,8) verbunden ist, dadurch **gekennzeichnet**, daß eine einzige Feder (142) vorgesehen ist, welche sich mit ihren beiden, sich im wesentlichen in Umfangsrichtung erstreckenden Enden (144,146) am Bremsträger (2) abstützt, und daß der äußere Bremsklotz (16) über eine Rastverbindung (65,70,92,126) mittels einer Rastfeder (92) lösbar am Sattel gehalten ist.

2. Schwimmsattelbremse nach Anspruch 1, dadurch **gekennzeichnet,** daß die beiden Enden (144,146) der Feder (142) im wesentlichen zu beiden Seiten des zugehörigen Bremsklotzes (14) am Träger (22) angreifen.

3. Schwimmsattelbremse nach Anspruch 1 oder 2, dadurch **gekennzeichnet,** daß das erste Ende (144) der Feder (142) in einer Öffnung (148) im Träger (22) angreift und das gegenüberliegende zweite Ende (146) hinter dem Trägerbügel (28) im Träger (22) rastend eingreift.

4. Schwimmsattelbremse nach einem der Ansprüche 1 bis 3, dadurch **gekennzeichnet,** daß der Trägerbügel durch einen Verbindungssteg (28) gebildet ist, welcher die beiden Abstützflächen (52,53,54,55) für den kolbenseitigen Bremsklotz (14) tragenden, im wesentlichen radial verlaufenden Bremsträgerarme (24,26) des Bremsträgers (22), die Betätigungseinrichtung (18,20) des Gehäuses (4) umgreifend, miteinander verbindet, so daß der Träger (22) in Einbaulage im wesentlichen die Form eines umgekehrten U hat.

5. Schwimmsattelbremse nach Anspruch 3 oder 4, dadurch **gekennzeichnet,** daß die Öffnung (148) durch ein in axialer Richtung verlaufendes Durchgangsloch gebildet ist, durch welches das erste Ende (144) der Feder (142) greift.

6. Schwimmsattelbremse nach Anspruch 5, dadurch **gekennzeichnet,** daß das erste Ende (144) der Feder (142) U-förmig ist, wobei der Mittelschenkel in dem Durchgangsloch (148) liegt und die äußeren Schenkel (152,154) des Federendes in jeweils einer zur Ebene des Trägers parallelen Ebene liegen.

7. Schwimmsattelbremse nach einem der Ansprüche 5 oder 6, dadurch **gekennzeichnet,** daß der die Feder (142) begrenzende äußere Schenkel (152) gegenüber dem Durchmesser des Durchgangslochs (148) derart lang gewählt ist, daß die Feder (142) nach Lösen der Rastung am ersten Federende (146) unverlierbar um die Längsachse (151) des Durchgangslochs (141) geschwenkt werden kann.

8. Schwimmsattelbremse nach einem der Ansprüche 5 oder 6, dadurch **gekennzeichnet,** daß der die Feder (142) begrenzende äußere Schenkel (152) gegenüber dem Durchmesser des Durchgangslochs (148) derart kurz gewählt ist, daß die Feder (142) nach Lösen der Rastung am ersten Federende (146) ausbaubar um die Längsachse (151) des Durchgangslochs (148) geschwenkt werden kann.

9. Schwimmsattelbremse nach einem der Ansprüche 3 oder 8, dadurch **gekennzeichnet,** daß das rastende zweite Ende (146) der Feder (142) hakenförmig ausgestaltet ist, wobei der Haken in einer zur Bremsscheibe (12) im wesentlichen radialen Ebene liegt.

10. Schwimmsattelbremse nach einem der Ansprüche 1 bis 9, dadurch **gekennzeichnet,** daß die Feder (142) ausgehend von dem zweiten Ende (146) einen sich in Umfangsrichtung der Bremsscheibe (12) erstreckenden ersten Abschnitt (156), daran anschließend einen im wesentlichen in axialer Richtung der Bremsscheibe (12) verlaufenden zweiten Abschnitt (158) und wiederum daran anschließend einen in horizontaler Ebene gegenüber der Umfangsrichtung schräg in Richtung Bremsscheibe (12) erstreckenden dritten Abschnitt (159) besitzt, wobei der dritte Abschnitt (159) länger als der zweite Abschnitt (158), aber kürzer als der erste Abschnitt (156) ist.

11. Schwimmsattelbremse nach Anspruch 10 und einem der Ansprüche 1 bis 9, dadurch **gekennzeichnet,** daß der mittlere zweite Abschnitt (158) mit einem zur Scheibendrehachse geneigten Winkel an der dem Brückenteil (10) des Gehäuses (4) abgewandten Kante (160) der Rückenplatten (61) des kolbenseitigen Bremsklotzes (14) angreift, wobei die Neigung derart gewählt ist, daß der Bremsklotz (14) neben der radialen Kraft auch eine axiale, in Richtung Kolben (20) weisende Kraft erfährt.

12. Schwimmsattelbremse nach Anspruch 11, dadurch **gekennzeichnet,** daß die Rückenplatte (61) an ihrer Kante (160) mit einem Ansatz (164) mit einer in Umfangsrichtung verlaufenden Kante versehen ist, an der der zweite Abschnitt (158) angreift.

13. Schwimmsattelbremse nach Anspruch 12, dadurch **gekennzeichnet,** daß symmetrisch zur in axialer Richtung verlaufenden Symmetrieebene jeweils ein Ansatz (164,166) an der Rückenplatte (61) vorgesehen ist.

14. Schwimmsattelbremse nach einem der Ansprüche 1 bis 13, dadurch **gekennzeichnet,** daß an der kolbenseitigen Rückwand der Rückenplatte (61) ein sich in der in axialer Richtung erstreckenden Symmetrieebene angeordneter Vorsprung (168) vorgesehen ist, der nahe der inneren Mantelfläche des Zylinderkolbens (20) sich in axialer Richtung in den Zylinderkolben (20) erstreckt.

15. Schwimmsattelbremse nach Anspruch 14, dadurch **gekennzeichnet,** daß der Vorsprung (168) durch eine keilförmige Rampe gebildet ist, wobei die Rampe zur äußeren Kante (160) der Rückenplatte (61) hin in Höhe der Symmetrieebene der Bremse ansteigt.

16. Schwimmsattelbremse nach einem der Ansprüche 1 bis 15, dadurch **gekennzeichnet,** daß der auf der dem Kolben abgewandten Seite der Bremse angeordnete Bremsklotz (16) ausschließlich an dem äußeren radialen Schenkel (8) des Bremsgehäuses (4) mittels der Rastfeder verankert ist.

17. Schwimmsattelbremse nach Anspruch 16, dadurch **gekennzeichnet,** daß der äußere Schenkel (8) mit mindestens zwei symmetrisch angeordneten, in axialer Richtung sich erstreckenden Öffnungen (70) versehen ist, in welche sich entsprechende Ansätze (65) der Rückenplatte (60) des äußeren Bremsklotzes (16) erstrecken und so den Bremsklotz (16) in radialer Richtung der Bremsscheibe (12) formschlüssig halten.

18. Schwimmsattelbremse nach einem der Ansprüche 16 oder 17, dadurch **gekennzeichnet,** daß der äußere Schenkel (8) in Höhe der Symmetrieebene der Bremse eine auf der der Gehäusebrücke (10) abgewandten Seite offene Ausnehmung (82) aufweist, an deren sich in radialer Richtung erstreckenden und parallel zur Mittelachse verlaufenden Seitenflächen (78) sich die Seitenflächen (74) eines entsprechend angeordneten Ansatzes (72) an der Rückenplatte (60) abstützen und den Bremsklotz (16) in Umfangsgrichtung der Bremsscheibe (12) verankern.

19. Schwimmsattelbremse nach einem der Ansprüche 16 bis 18, dadurch **gekennzeichnet,** daß in der Symmetrieebene der Rückenplatte (60) des äußeren Bremsklotzes (16) die zwei sich im wesentlichen in Umfangsrichtung erstreckenden Federarme (99,100) aufweisende, als Blattfeder (92) ausgestaltete Rastfeder befestigt ist, deren in radialer Richtung abgebogene Endstücke (101) sich mit Vorspannung an dem Schenkel (8) abstützen und versuchen, den Bremsklotz von der Gehäusebrücke (10) wegzudrücken.

20. Schwimmsattelbremse nach Anspruch 19, dadurch **gekennzeichnet,** daß der Schenkel (8) mit den Endstücken (101) zugeordneten, sich in radialer Richtung erstreckenden keilförmigen Ablaufschrägen (124,125) versehen ist, an die in Einbaurichtung eine sich in radialer Richtung erstreckende Anlagefläche (126,127) anschließt, an der die in axialer Richtung vorgespannten Endstücke (101) angreifen.

21. Schwimmsattelbremse nach einem der Ansprüche 19 oder 20, dadurch **gekennzeichnet,** daß die Blattfeder (92) zu beiden Seiten ihrer Befestigungsstelle (96) in ihren Federarmen (99,100) S-förmig gefaltet ist.

22. Schwimmsattelbremse nach einem der Ansprüche 19 bis 21, dadurch **gekennzeichnet,** daß die Endstücke (101) in eine Halbkreisform auslaufen und außerhalb der Befestigungsebene (94,96) der Blattfeder (92) liegen.

23. Schwimmsattelbremse nach einem der Ansprüche 1 bis 23,
dadurch **gekennzeichnet,**
daß die Feder (142) durch eine Drahtfeder gebildet ist.

24. Schwimmsattelbremse mit kolbenseitigem Bremsklotz nach einem der Ansprüche 1 bis 23,
dadurch **gekennzeichnet,**
daß auf der dem Belag abgewandten Seite der Rückenplatte (61) ein in radialer Richtung nach außen ansteigender, symmetrisch angeordneter rampenförmiger Ansatz (168) vorgesehen ist, der an seinem äußeren Ende senkrecht zur Plattenebene abfällt.

25. Kolbenseitiger Bremsklotz (14) der Schwimmsattelbremse nach einem der Ansprüche 1 bis 24,
dadurch **gekennzeichnet,**
daß an der radial außenliegenden, kreisabschnittsförmigen Kante (16) außermittig zwei im wesentlichen trapezförmige Ansätze (164, 166) vorgesehen sind, deren radial äußere Fläche als Drahtfeder-Abstützfläche ausgebildet ist.

26. Äußerer Bremsklotz (16) einer Schwimmsattelbremse nach einem der Ansprüche 1 bis 24,
dadurch **gekennzeichnet,**
daß die Rastverbindung einen auf seiner Rückenplatte (60) symmetrisch angeordneten, im wesentlichen rechteckförmig sich in Längsrichtung des Reibbelages erstreckenden Umfangsabstütz-Ansatz (72) und zu beiden Seiten des rechteckförmigen Umfangsabstütz-Ansatzes (72) zwei in radialer Richtung gestreckte Radialabstütz-Ansätze (65) aufweist.

27. Bremsklotz nach Anspruch 25 oder 26,
dadurch **gekennzeichnet,**
daß die Ansätze (65, 72, 168) auf der dem Belag abgewandten Seite der Rückenplatte durch einen Prägevorgang ausgebildet sind.

28. Feder einer Schwimmsattelbremse nach einem der Ansprüche 1 bis 24,
dadurch **gekennzeichnet,**
daß sie, bezogen auf eine das erste Ende (144) mit dem zweiten Ende (146) verbindende gedachte Verbindungslinie einen sich parallel zur Verbindungslinie erstreckenden ersten Abschnitt (156), daran anschließend einen im wesentlichen quer zur Verbindungslinie verlaufenden zweiten Abschnitt (158) und wiederum daran anschließend einen schräg zur Verbindungslinie verlaufenden dritten Abschnitt (159) besitzt, wobei der dritte Abschnitt (159) länger als der zweite Abschnitt (158), aber kürzer als der erste Abschnitt (156) ist.

29. Feder nach Anspruch 28,
dadurch **gekennzeichnet,**
daß sie aus Federdraht gebildet ist.

30. Verfahren zum Ausbau von Bremsklötzen bei einer Schwimmsattel-Scheibenbremse nach einem der Ansprüche 1 bis 24,
dadurch **gekennzeichnet,**
daß die Feder (142) an ihrem rastenden Ende (146) ausgerastet und dann um ihr anderes Ende (152) vom Gehäuse (4) weggeschwenkt wird, daß der kolbenseitige Bremsklotz (14) so weit gekippt bzw. in axialer Richtung verschoben wird, bis der nasenförmige Ansatz (168) vor dem Bremskolben (20) liegt und danach der Bremsklotz herausgeschoben wird,
daß die Bremsscheibe (12) in den so gewonnenen Freiraum gekippt und aus dem Raum zwischen den Bremsgehäuseschenkeln (6, 8) gehoben wird und
daß anschließend die Ansätze (65) des äußeren Bremsklotzes (16) aus den Öffnungen (70) um den zugehörigen Gehäuseschenkel (8) geschwenkt werden, und der äußere Bremsklotz (16) mittels der Ablaufschrägen (124, 125) durch die in axialer Richtung vorgespannten Blattfederenden (101) aus dem Bremsgehäuse gedrückt wird.

31. Verfahren zum Einbau des äußeren Bremsklotzes bei einer Schwimmsattel-Scheibenbremse nach einem der Ansprüche 1 bis 24,
dadurch **gekennzeichnet,**
daß der äußere Bremsklotz (16) durch die Seitenflächen (74) des mittleren Ansatzes (72) in der Ausnehmung (82) in radialer Richtung geführt wird, bis die Endstücke (101) auf den entsprechenden Ablaufschrägen (124, 125) des Gehäuseschenkels (8) aufsitzen und daß danach der äußere Bremsklotz (16) in radialer Richtung so weit in das Gehäuse gedrückt wird, bis die Endstücke (101) an den zugehörigen Anlageflächen (126, 127) des Schenkels anliegen und die radial verlaufenden Ansätze (65) in die zugehörigen Schenkelöffnungen (70) einrasten.

## Claims

1. An internally straddling floating-caliper brake with a piston-side internal and an external brake shoe (14 and 16, respectively), the internal brake shoe (14) being preloaded in radial direction in relation to its mounting support (15, 17) by resilient force which takes support on a carrier bar (28) interconnecting the two arms (24, 26) of the brake carrier (22), and the external brake shoe (16) being detachably connected to the caliper (4, 8),
**characterized** in that one single spring (142) is provided which, with both its ends (144, 146) extending substantially in circumferential direction, is supported at the brake carrier (2), and in that the external brake shoe (16) is retained detachably on the caliper through a snap-in engagement (65, 70, 92, 126) by means of a stop spring (92).

2. A floating-caliper brake as claimed in claim 1,
**characterized** in that the two ends (144, 146) of the spring (142) make catch at the carrier (22) substantially on either side of the associated brake shoe (14).

3. A floating-caliper brake as claimed in claim 1 or claim 2,
**characterized** in that the first end (144) of the spring (142) acts in an opening (148) in the carrier (22), and in that the opposite second end (146) makes catch behind a carrier bar (28) in the carrier (22) where it is arrested.

4. A floating-caliper brake as claimed in anyone of the claims 1 to 3,
**characterized** in that the carrier bar is formed by a connecting web (28) which, straddling the actuating device (18, 20) of the housing (4), interconnects the two brake carrier arms (24, 26) of the brake carrier (22) which bear the skids (52, 53, 54, 55) for the piston-side brake shoe (14) and extend substantially in radial direction, so that the carrier (22) in its mounting position substantially has the shape of an inverted U.

5. A floating-caliper brake as claimed in claim 3 or claim 4,
**characterized** in that the opening (148) is formed by a through bore extending in axial direction which is engaged by the first end (144) of the spring (142).

6. A floating-caliper brake as claimed in claim 5,
**characterized** in that the first end (144) of the spring (142) is of U-shaped design, the central stem being disposed in the through bore (148) and the external stems (152, 154) of the spring end being each arranged in a plane which is parallel to the plane of the said carrier.

7. A floating-caliper brake as claimed in anyone of claims 5 or 6,
**characterized** in that the external stem (152) bounding the spring (142) is selected sufficiently long relative to the diameter of the through bore (148) as to allow the spring (142) to be unlosingly swung about the longitudinal axis (151) of the through bore (148) upon disarresting of the first spring end (146).

8. A floating-caliper brake as claimed in anyone of claims 5 or 6,
**characterized** in that the external stem (152) bounding the spring (142) is selected sufficiently short relative to the diameter of the through bore (148) as to allow the spring (142) to be removably swung about the longitudinal axis (151) of the through bore (148) upon disarresting of the first spring end (146).

9. A floating-caliper brake as claimed in anyone of claims 3 or 8,
**characterized** in that the arresting second end (146) of the spring (142) has a hook-shaped configuration, said hook being disposed in a plane substantially radial relative to the brake disc (12).

10. A floating-caliper brake as claimed in anyone of claims 1 to 9,
**characterized** in that starting from the second end (146) the spring (142) is furnished with a first section (156) extending in circumferential direction of the brake disc (12), succeeding that a second section (158) extending substantially in axial direction of the brake disc (12), and succeeding that one it is furnished with a third section (159) extending in a horizontal plane relative to the circumferential direction obliquely in the direction of the brake disc (12), the said third section (159) being longer than the second section (158) but shorter than the first section (156).

11. A floating-caliper brake as claimed in claim 10 and anyone of claims 1 to 9,
**characterized** in that the central second section (158) makes catch, at an angle inclined relative to the axis of rotation of the disc, at the edge (160) of the backplate (61) of the piston-side brake shoe (14), which said edge (160) faces away from the bridge section (10) of the housing (4), said inclination being selected such that the brake shoe (14) is subjected, besides the radial force, also to an axial force directed toward the piston (20).

12. A floating-caliper brake as claimed in claim 11,
**characterized** in that the backplate (61) is furnished at its edge (160) with a projection (164) presenting an edge running in circumferential direction at which the second section (158) makes catch.

13. A floating-caliper brake as claimed in claim 12,
**characterized** in that symmetrically relative to the plane of symmetry extending in axial direction one each projection (164, 166) is provided at the backplate (61).

14. A floating-caliper brake as claimed in anyone of claims 1 to 13,
**characterized** in that, at the piston-side rear wall of the backplate (61), a projection (168) arranged in the plane of symmetry extending in axial direction is provided which extends near the inner peripheral surface of the cylinder piston (20) in axial direction into the cylinder piston (20).

15. A floating-caliper brake as claimed in claim 14,
**characterized** in that the projection (168) is formed by a conical ramp, said ramp rising toward the external edge (160) of the backplate (61) at the level of the plane of symmetry of the brake.

16. A floating-caliper brake as claimed in anyone of claims 1 to 15,
**characterized** in that the brake shoe (16) disposed on the side of the brake facing away from the piston is exclusively anchored at the external radial stem (8) of the brake housing (4) by means of the stop spring.

17. A floating-caliper brake as claimed in claim 16,
**characterized** in that the external stem (8) is provided with at least two symmetrically arranged openings (70) extending in axial direction into which corresponding projections (65) of the backplate (60) of the external brake shoe (16) extend, so retaining the brake shoe (16) in a positive locking fit in radial direction relative to the brake disc (12).

18. A floating-caliper brake as claimed in anyone of claims 16 or 17,
**characterized** in that, at the level of the plane of symmetry of the brake, the external stem (8) presents a recess (82) being open on the side facing away from the bridge section (10) of the housing at whose lateral surfaces (78) extending in radial direction and running parallel to the centre line the lateral surfaces (74) of a correspondingly arranged projection (72) at the backplate (60) take support, anchoring the brake shoe (16) in circumferential direction of the brake disc (12).

19. A floating-caliper brake as claimed in anyone of claims 16 to 18,
**characterized** in that, in the plane of symmetry of the backplate (60) of the second brake shoe (16), a stop spring designed as leaf-type spring (92) is fastened which is furnished with two spring arms (99, 100) extending substantially in circumferential direction, the said spring's final portions (101) bent off in radial direction take support at the stem (8) with an initial tension and tend to urge the brake shoe away from the housing bridge (10).

20. A floating-caliper brake as claimed in claim 19,
**characterized** in that the stem (8) is furnished with conical leaving-side slopes (124, 125) associated with said final portions (101) and extending in radial direction which are succeeded in the mounting direction by an abutment surface (126, 127) extending in radial direction, at which the said final portions (101) biassed in axial direction make catch.

21. A floating-caliper brake as claimed in anyone of claims 19 or 20,
**characterized** in that the leaf-type spring (92) is folded in S-shape fashion in its spring arms (99, 100) on either side of its point of fixation (96).

22. A floating-caliper brake as claimed in anyone of claims 19 to 21,
**characterized** in that the final portions (101) end up in a semicircular shape and are arranged outside the plane of fixation (94, 96) of the leaf-type spring (92).

23. A floating-caliper brake as claimed in anyone of claims 1 to 22,
**characterized** in that the spring (142) is formed by a wire spring.

24. A floating-caliper brake with a piston-side brake shoe as claimed in anyone of claims 1 to 23,
**characterized** in that on the side of the backplate (61) facing away from the lining a symmetrically arranged ramp-shaped projection (168) rising toward the outside in radial direction is provided which falls vertically to the plane of the plate at its outside end.

25. A piston-side brake shoe (14) of the floating-caliper brake as claimed in anyone of claims 1 to 24,
**characterized** in that two substantially trapezoidal projections (164, 166) are provided eccentrically at the circular segment-shaped edge (160) located externally in radial direction, the radially external surface of the projections being designed as a wire spring supporting surface.

26. An external brake shoe (16) of a floating-caliper brake as claimed in anyone of the claims 1 to 24,
**characterized** in that the snap-in engagement comprises a circumferentially supporting projection (72) which is arranged symmetrically on its backplate (60) and extends substantially rectangularly in longitudinal direction of the friction lining, and comprises two radially supporting projections (65) on either side of the rectangular circumferentially supporting projection (72) which extend in radial direction.

27. A brake shoe as claimed in claim 25 or claim 26,
**characterized** in that the projections (65, 72, 168) are fabricated by a stamping process on the side of the backplate facing away from the lining.

28. A spring for a floating-caliper brake as claimed in anyone of the claims 1 to 24,
**characterized** in that, relative to an imaginary line connecting the first end (144) with the second end (146), it is furnished with a first section (156) extending parallel to the connecting line, succeeding that it is furnished with a second section (158) running substantially in transverse direction relative to said connecting line and succeeding that one with a third section (159) extending obliquely relative to the connecting line, the said third section (159) being longer than the second section (158) but shorter than the first section (156).

29. A spring as claimed in claim 28,
**characterized** in that it is formed of spring wire.

30. A process for the disassembly of brake shoes in a floating-caliper disc brake as claimed in anyone of claims 1 to 24,
**characterized** in that the spring (142) is disarrested at its arresting end (146) and is then swung-about its other end (152) away from the housing (4), in that the piston-side brake shoe (14) is tilted or shifted in axial direction to such an extent that the nose-shaped projection (168) comes to be located before the brake piston (20) and subsequently the brake shoe is removed,
in that the brake disc (12) is tilted into the free space so gained and is lifted off from the space between the stems (6, 8) of the brake housing, and
in that subsequently the projections (65) of the external brake shoe (16) are swung out of the openings (70) about the associated housing stem (8), and in that the external brake shoe (16) is urged out of the brake housing by means of the leaving-side slopes (124, 125) by the action of the leaf-type spring ends (101) which are biassed in axial direction.

31. A process for the assembly of the external brake shoe in a floating-caliper disc brake as claimed in anyone of claims 1 to 24,
**characterized** in that the external brake shoe (16) is guided in radial direction within the recess (82) by the lateral surfaces (74) of the central projection (72) until the final portions (101) come to rest on the corresponding leaving-side slopes (124, 125) of the housing stem (8), and in that subsequently the external brake shoe (16) is pushed into the housing in radial direction to such an extent that the final portions (101) come to be abutted on the associated abutment surfaces (126, 127) of the stem and that the radially extending projections (65) come to be arrested in the associated stem openings (70).

## Revendications

1. Frein à étrier flottant, à enveloppement intérieur, comprenant une plaquette de frein intérieure (14), située du côté du piston, et une plaquette de frein extérieure (16), la plaquette de frein intérieure (14) étant soumise à une précontrainte en direction radiale vers son appui (15, 17) par une force élastique prenant appui sur un arc de support (28) réunissant les deux bras (24, 26) du support de frein (22) et la plaquette de frein extérieure (16) étant reliée d'une manière amovible à l'étrier (4, 8), caractérisé en ce qu'il est prévu un seul ressort (142) qui, par ses deux extrémités (144, 146) s'étendant pratiquement suivant la direction circonférentielle, prend appui sur le support de frein (22) et en ce que la plaquette de frein extérieure (16) est maintenue d'une manière amovible sur l'étrier au moyen d'un ressort d'enclenchement (92), par l'intermédiaire d'une liaison d'enclenchement (65, 70, 92, 126).

2. Frein à étrier flottant suivant la revendication 1, caractérisé en ce que les deux extrémités (144, 146) du ressort (142) s'accrochent sur le support (22) pratiquement de part et d'autre de la plaquette de frein (14) associée.

3. Frein à étrier flottant suivant l'une des revendications 1 et 2, caractérisé en ce que la première extrémité (144) du ressort (142) s'accroche dans un orifice (148) ménagé dans le support (22) et en ce que la seconde extrémité (146), opposée, s'accroche par enclenchement dans le support (22), derrière l'arc de support (28).

4. Frein à étrier flottant suivant l'une des revendications 1 à 3, caractérisé en ce que l'arc de support est formé par une barre de liaison (28) qui réunit entre elles, en chevauchant le dispositif d'actionnement (18, 20) du boîtier (4), les deux surfaces d'appui (52, 53, 54, 55) prévues pour des bras (24, 26) du support de frein (22) qui portent la plaquette de frein (14) située du côté du piston et qui s'étendent d'une manière pratiquement radiale, de sorte qu'en position assemblée, le support (22) a pratiquement la forme d'un U retourné.

5. Frein à étrier flottant suivant l'une des revendications 3 et 4, caractérisé en ce que l'orifice (148) est formé par un trou de passage, s'étendant en direction axiale, par lequel la première extrémité (144) du ressort (142) s'accroche.

6. Frein à étrier flottant suivant la revendication 5, caractérisé en ce que la première extrémité (144) du ressort (142) est en forme de U, la branche centrale étant disposée dans le trou de passage (148) et les branches extérieures (152, 154) d'extrémité du ressort étant situées chacune dans un plan parallèle au plan du support.

7. Frein à étrier flottant suivant l'une des revendications 5 et 6, caractérisé en ce que la branche extérieure (152) limitant le ressort (142) est choisie d'une manière suffisamment longue par rapport au diamètre du trou de passage (148) pour qu'après libération de l'enclenchement, on puisse faire pivoter le ressort (142) à sa première extrémité (146), sans qu'il puisse se perdre, autour de l'axe longitudinal (151) du trou de passage (148).

8. Frein à étrier flottant suivant l'une des revendications 5 et 6, caractérisé en ce que la branche extérieure (152) limitant le ressort (142) est choisie suffisamment courte par rapport au diamètre du trou de passage (148) pour qu'après libération de l'enclenchement, on puisse faire pivoter le ressort (142) à sa première extrémité (146), d'une manière lui permettant d'être démonté, autour de l'axe longitudinal (151) du trou de passage (148).

9. Frein à étrier flottant suivant l'une des revendications 3 et 8, caractérisé en ce que la seconde extrémité (146) du ressort (142) qui fait l'objet d'un enclenchement est réalisée en forme de crochet, le crochet étant situé dans un plan pratiquement radial vis-à-vis du disque de frein (12).

10. Frein à étrier flottant suivant l'une des revendications 1 à 9, caractérisé en ce qu'à partir de sa seconde extrémité (146), le ressort (142) comporte un premier tronçon (156) s'étendant suivant la direction circonférentielle du disque de frein (12), puis, s'y raccordant, un deuxième tronçon (158) s'étendant pratiquement suivant la direction axiale du disque de frein (12) et, s'y raccordant à son tour, un troisième tronçon (159) s'étendant dans un plan horizontal d'une manière inclinée en direction du disque de frein (12) vis-à-vis de la direction circonférentielle, le troisième tronçon (159) étant plus long que le deuxième tronçon (158), mais plus court que le premier tronçon (156).

11. Frein à étrier flottant suivant la revendication 10, caractérisé en ce que le deuxième tronçon (158), central, s'accroche, suivant un angle incliné vis-à-vis de l'axe de rotation du disque, sur l'arête (160) de la plaquette de support (61) de la plaquette de frein (14) située du côté du piston qui est située à l'opposé de la partie formant pont (10) du boîtier (4), l'inclinaison étant choisie de façon telle que la plaquette de frein (14) est aussi soumise, en sus de la force radiale, à une force orientée axialement en direction du piston (20).

12. Frein à étrier flottant suivant la revendication 11, caractérisé en ce que, sur son bord (160), la plaquette de support (61) comporte une patte (164) présentant un bord qui s'étend suivant la direction circonférentielle et sur lequel le deuxième tronçon (158) s'accroche.

13. Frein à étrier flottant suivant la revendication 12, caractérisé en ce que, sur la plaquette de support (61), il est prévu une patte (164, 166) en chacun de deux emplacements situés d'une manière symétrique par rapport au plan de symétrie s'étendant suivant la direction axiale.

14. Frein à étrier flottant suivant l'une des revendications 1 à 13, caractérisé en ce que, sur la face arrière de la plaquette de support (61) qui est située du côté du piston, il est prévu une partie en saillie (168) qui est disposée dans le plan de symétrie orienté suivant la direction axiale et qui s'étend en direction axiale dans le piston de cylindre (20), près de la surface-enveloppe intérieure de ce piston de cylindre (20).

15. Frein à étrier flottant suivant la revendication 14, caractérisé en ce que la partie en saillie (168) est constituée d'une rampe en forme de coin, cette rampe s'élevant en hauteur dans le plan de symétrie du frein en direction du bord extérieur (160) de la plaquette de support (61).

16. Frein à étrier flottant suivant l'une des revendications 1 à 15, caractérisé en ce que la plaquette de frein (16) disposée du côté du frein qui est situé à l'opposé du piston est ancrée, au moyen d'un ressort d'enclenchement, exclusivement sur l'aile radiale extérieure (8) du boîtier de frein (4).

17. Frein à étrier flottant suivant la revendication 16, caractérisé en ce que l'aile extérieure (8) est pourvue d'au moins deux orifices (70) qui sont disposés d'une manière symétrique et sont orientés en direction axiale et dans lesquels s'étendent des parties en saillie (65) correspondantes de la plaquette de support (60) de la plaquette de frein extérieure (16), ces orifices maintenant ainsi la plaquette de frein (16) par complémentarité de formes suivant la direction radiale du disque de frein (12).

18. Frein à étrier flottant suivant l'une des revendications 16 et 17, caractérisé en ce qu'en hauteur dans le plan de symétrie du frein, l'aile extérieure (8) comporte un évidement (82) qui est ouvert du côté situé à l'opposé du pont de boîtier (10), tandis que les surfaces latérales (74) d'une partie en saillie (72), à disposition appropriée, de la plaquette de support (60) prennent appui sur les surfaces latérales (78) de cet évidement (82) qui sont orientées en direction axiale et s'étendent parallèlement à l'axe central et que ces surfaces latérales (74) servent à ancrer la plaquette de frein (16) suivant la direction circonférentielle du disque de frein (12).

19. Frein à étrier flottant suivant l'une des revendications 16 à 18, caractérisé en ce que le ressort d'enclenchement, qui comporte deux branches de ressort (99, 100) orientées pratiquement en direction circonférentielle et qui est réalisé sous la forme d'un ressort à lame (92), est fixé dans le plan de symétrie de la plaquette de support (60) de la plaquette de frein extérieure (16), les tronçons extrêmes (101), repliés en direction axiale, de ce ressort d'enclenchement, prenant appui sous une certaine précontrainte sur l'aile (8) en ayant tendance à repousser la plaquette de frein du pont de boîtier (10).

20. Frein à étrier flottant suivant la revendication 19, caractérisé en ce que l'aile (8) est pourvue de biseaux de sortie (124, 125), en forme de coin, qui sont associés aux tronçons extrêmes (101) et sont orientés en direction radiale et auxquels se raccorde, en position d'assemblage, une surface d'appui (126, 127) qui est orientée en direction radiale et sur laquelle prennent appui les tronçons extrêmes (101) faisant l'objet d'une précontrainte en direction axiale.

21. Frein à étrier flottant suivant l'une des revendications 19 et 20, caractérisé en ce que, de part et d'autre de sa zone de fixation (96), le ressort à lame (92) est plié en S dans ses branches de ressort (99, 100).

22. Frein à étrier flottant suivant l'une des revendications 19 à 21, caractérisé en ce que les tronçons extrêmes (101) se terminent suivant une forme en demi-cercle et sont situés en dehors du plan de fixation (94, 96) du ressort à lame (92).

23. Frein à étrier flottant suivant l'une des revendications 1 à 23, caractérisé en ce que le ressort (142) est constitué d'un ressort en fil métallique.

24. Frein à étrier flottant, comportant une plaquette de frein située du côté du piston, suivant l'une des revendications 1 à 23, caractérisé en ce que, du côté de la plaquette de support (61) qui est situé à l'opposé de la garniture, il est prévu une partie en saillie (168), en forme de rampe, qui est disposée d'une manière symétrique et s'élève en direction radiale vers l'extérieur et qui, à son extrémité extérieure, retombe perpendiculairement au plan de la plaquette.

25. Plaquette de frein (14), située du côté du piston, d'un frein à étrier flottant suivant l'une des revendications 1 à 24, caractérisée en ce que, au milieu et extérieurement, sur son bord (16) radialement extérieur qui est en forme de segment de cercle, il est prévu deux pattes (164, 166), pratiquement en forme de trapèze, dont la surface radialement extérieure est agencée sous la forme d'une surface d'appui du ressort en fil métallique.

26. Plaquette de frein extérieure (16) d'un frein à étrier flottant suivant l'une des revendications 1 à 24, caractérisée en ce que la liaison d'enclenchement comprend une partie en saillie (72) d'appui circonférentiel, disposée d'une manière symétrique sur sa plaquette de support (60) et s'étendant suivant la direction longitudinale de la garniture de friction pratiquement suivant une forme de rectangle, et, de part et d'autre de cette partie en saillie rectangulaire (72) d'appui circonférentiel, deux parties en saillie (65) d'appui radial qui sont orientées en direction radiale.

27. Plaquette de frein suivant l'une des revendications 25 et 26, caractérisée en ce que les parties en saillie (65, 72, 168) sont réalisées par une opération de repoussage sur la face de la plaquette de support qui est située à l'opposé de la garniture.

28. Ressort d'un frein à étrier flottant suivant l'une des revendications 1 à 24, caractérisé en ce que, rapporté à une ligne imaginaire de liaison reliant sa première extrémité (144) à sa seconde extrémité (146), il comporte un premier tronçon (156) orienté parallèlement à la ligne de liaison, puis, s'y raccordant, un deuxième tronçon (158) orienté pratiquement perpendiculairement à la ligne de liaison et, s'y raccordant à son tour, un troisième tronçon (159) orienté d'une manière inclinée vis-à-vis de la ligne de liaison, ce troisième tronçon (159) étant plus long que le deuxième tronçon (158), mais plus court que le premier tronçon (156).

29. Ressort suivant la revendication 28, caractérisé en ce qu'il est réalisé sous la forme d'un ressort en fil métallique.

30. Procédé de démontage de plaquettes de frein dans un frein à disque à étrier flottant suivant l'une des revendications 1 à 24, caractérisé en ce qu'on fait quitter au ressort (142) son enclenchement à son extrémité (146) par laquelle il est enclenché et on l'éloigne du boîtier (4) en le faisant pivoter autour de son autre extrémité (152), on fait basculer la plaquette de frein (14) située du côté du piston, ou on la déplace en direction axiale, suffisamment loin pour que la partie en saillie (168) en forme de bec soit située en avant du piston de frein (20) et on fait alors sortir la plaquette de frein en la faisant glisser, on fait basculer le disque de frein (12) dans l'espace libre ainsi réalisé et on le soulève hors de cet espace, entre les ailes (6, 8) du boîtier de frein, et enfin on fait basculer les parties en saillie (65) de la plaquette de frein extérieure (16) autour de l'aile (8) correspondante du boîtier pour les faire sortir des orifices (70) et on repousse cette plaquette de frein extérieure (16) hors du boîtier de frein au moyen des biseaux de sortie (124, 126), sous l'action des extrémités (101) du ressort à lame qui sont soumises à une précontrainte en direction axiale.

31. Procédé de montage de la plaquette de frein extérieure dans un frein à disque à étrier flottant suivant l'une des revendications 1 à 24, caractérisé en ce qu'on fait glisser la plaquette de frein extérieure (16) en direction radiale dans l'évidement (82) au moyen des surfaces latérales (74) de la partie en saillie (72) centrale, jusqu'à ce que les extrémités (101) soient en appui sur les biseaux de sortie (124, 125) correspondants de l'aile (8) du boîtier et en ce qu'on enfonce ensuite la plaquette de frein extérieure (16) en direction radiale, dans le boîtier, suffisamment loin pour que les extrémités (101) viennent en appui sur les surfaces d'appui (126, 127) correspondantes de l'aile et que les parties en saillie (65) qui sont orientées radialement s'enclenchent dans les orifices (70) correspondants de l'aile.
